# EUROPÄISCHE PATENTSCHRIFT

(11) **EP 0 353 488 B1**
(45) Veröffentlichungstag und Bekanntmachung des Hinweises auf die Patenterteilung: **13.10.1993**
(21) Anmeldenummer: 89112342.4
(22) Anmeldetag: 06.07.1989
(51) Int. Cl.: B64C 1/00

(54) **Cockpit, insbesondere für einen Hubschrauber**
Cockpit, in particular for a helicopter
Habitacle, en particulier pour hélicoptère

(30) Priorität: 05.08.1988 DE 3826636
(43) Veröffentlichungstag der Anmeldung: 07.02.1990
(73) Patentinhaber: Eurocopter Deutschland Gesellschaft mit beschränkter Haftung, D-81611 München (DE)
(72) Erfinder: Unterhitzenberger, Josef, Kolbermoor (DE)
(74) Vertreter: Frick, Gerhard, Dipl.-Ing.

(56) Entgegenhaltungen:
- FR-A- 1 296 103
- FR-A- 2 202 809
- FR-A- 2 292 623
- ASTRONAUTICS AND AERONAUTICS. vol. 18, no. 10, Oktober 1980, NEW YORK US Seiten 60 - 63; Fouse,Kuhn: "Expanded-Tube Technology"

## Beschreibung

Die Erfindung bezieht sich auf ein Cockpit, insbesondere für einen Hubschrauber, nach dem Oberbegriff des Patentanspruchs 1.

Aus der FR-A 2 292 623 ist eine Cockpit-Struktur bekannt, die aus einer mehr oder weniger geschlossenen selbsttragenden Außenschale besteht, welche die tragende Struktur des Cockpits bildet. Eine solche Cockpit-Schalenbauweise, die an aerodynamische, nicht aber andere, insbesondere punktförmige Belastungen angepaßt ist und zwangsläufig nur relativ kleine Fenster- und Türausschnitte gestattet, die zumeist noch mit zusätzlichen Versteifungen versehen sein müssen, um unzulässige örtliche Spannungskonzentrationen zu vermeiden, ist nicht Gegenstand der Erfindung.

Bei dem bekannten Cockpit der eingangs genannten Art hingegen besteht die tragende Cockpit-Struktur aus einem nach Art eines Fachwerks an die angreifenden statischen und dynamischen Belastungen angepaßten Traggerüst, dessen formsteif miteinander verbundene Gerüstteile aus Gewichtsgründen in Leichtbauweise als Metall-Hohlprofile ausgebildet sind, wobei eine kostengünstige Fertigung des Traggerüstes unter Berücksichtigung der relativ begrenzten Stückzahlen von Luftfahrzeugen dadurch erreicht wird, daß die einzelnen Gerüstteile jeweils getrennt voneinander vorgefertigt und dann zu dem fertigen Traggerüst zusammengefügt, z.B. verschweißt werden. Die sich dabei ergebenden Fertigungstoleranzen werden beim Einbau der Cockpit-Frontscheiben und -Türen, für die vor allem im Hubschrauberbau eine hohe Paßgenauigkeit gefordert wird, ausgeglichen, wobei der hierfür benötigte Montageaufwand im Hinblick auf die mit dieser Herstellungsmethode ansonsten erzielten Kosten- und Gewichtsvorteile in Kauf genommen wird.

Aufgabe der Erfindung ist es, das Cockpit der eingangs genannten Art so auszubilden, daß unter Einhaltung einer gewichtssparenden Bauweise der Gesamtaufwand auch unter Berücksichtigung der für Luftfahrzeuge üblichen Stückzahlbegrenzung reduziert wird.

Diese Aufgabe wird erfindungsgemäß durch das im Patentanspruch 1 gekennzeichnete Cockpit gelöst.

Durch die beanspruchte Ausbildung der zumindest einen Cockpit-Türausschnitt umgreifenden Gerüstteile als integral in einem Formwerkzeug hergestellte Tragprofilstruktur aus Faserverbundwerkstoff oder superplastisch verformtem Metall wird nicht nur das Baugewicht des Cockpits gesenkt, weil gesonderte, gewichtserhöhende Versteifungen oder Verbindungen, wie Schraub- oder Nietverbindungen zwischen den einzelnen Gerüstteilen entfallen, sondern überraschenderweise wird auch der durch die Integralbauweise bedingte Mehraufwand bereits bei relativ geringen Cockpit-Stückzahlen dadurch mehr als ausgeglichen, daß die sonst anfallenden, zeitaufwendigen Einpaßarbeiten für den Einbau der Cockpit-Türen und vorzugweise auch -Fenster nicht nur beim Ersteinbau, sondern auch bei einer späteren Erneuerung fortfallen.

Mit der Erfindung wird somit eine paßgenaue Ausbildung des Traggerüstes im Bereich der Cockpit-Ausschnitte und dadurch eine volle Austauschbarkeit der Türen (und Fenster) auch unter Kostengesichtspunkten und selbst für die übliche Kleinserien-Fertigung ermöglicht.

Ein weiterer, wesentlicher Aspekt der Erfindung besteht darin, daß die integrale Tragprofil-Struktur im Hinblick auf eine festigkeitsmäßig optimale Materialausnutzung und Gewichtsersparnis gemäß Anspruch 2 einen Hohlprofilquerschnitt, und zwar nach Anspruch 3 vorzugsweise in Form eines geschlossenen Hohlprofils, aufweist.

Um die integrale Tragprofil-Struktur beim Ausformen und Erhärten im Formwerkzeug auf einfache Weise mit einem Hohlprofil-Querschnitt herzustellen, wird der Hohlprofil-Innenraum gemäß Anspruch 4 zweckmäßigerweise mit einem Waben-, Schaumstoff- oder Druckschlauch-Stützkern ausgefüllt. Wahlweise ist es gemäß Anspruch 5 jedoch auch möglich, aus dem gleichen Material wie die herzustellende Tragprofil-Struktur vorgefertigte, formstabile Teilprofilelemente in das Formwerkzeug miteinzulegen, die unter Freihaltung des Hohlprofil-Innenraums gemeinsam mit dem an den Formflächen des Formwerkzeugs ausgeformten Werkstoff (Faserverbundwerkstoff oder superplastisch verformtes Metall) zu der integralen Cockpitstruktur erhärtet werden, wodurch zum einen der Herstellungs- und der - wenn auch geringe - Gewichtsaufwand für einen inneren Hohlprofil-Stützkern entfällt und zum anderen selbst für eine integrale Tragprofil-Struktur mit einem komplizierten Hohlprofil-Querschnittsverlauf ein relativ einfaches Formwerkzeug ausreicht.

In besonders bevorzugter Weise wird die Außenverkleidung des Cockpits aus Herstellungsgründen gemäß Anspruch 6 gleichzeitig und gemeinsam mit der Tragprofilstruktur im Formwerkzeug mitausgeformt und erhärtet, und weiterhin umfaßt die Tragprofil-Struktur gemäß Anspruch 7 mindestens zwei Cockpit-Ausschnitte einschließlich des Türausschnitts. Die Vorteile der erfindungsgemäßen Bauweise zeigen sich besonders deutlich bei einem Hubschrauber-Cockpit mit einem zwischen zwei Frontfensterausschnitten des Cockpits in der Cockpit-Mittelebene angeordneten Tragpfosten. Ein derartiges Cockpit wird gemäß Anspruch 8 aus zwei zur Cockpit-Mittelebene spiegelsymmetrischen, jeweils als integrale Tragprofil-Struktur ausgebildeten Cockpit-Hälften zusammengesetzt.

Die Erfindung wird nunehr anhand eines Ausführungsbeispieles in Verbindung mit den Zeichnungen näher erläutert. Es zeigen in schematischer Darstellung:
- **Fig. 1**: die perspektivische Ansicht eines Hubschrauber-Cockpits im zusammengebauten Zustand;
- **Fig. 2**: das Hubschrauber-Cockpit gemäß Fig. 1 vor dem Zusammenbau;
- **Fig. 3**: eine Verbindungslasche, durch die die beiden Cockpit-Hälften gemäß Fig. 2 längs des Mittelpfostens zusammengebaut werden;
- **Fig. 4**: ein vorgeformtes Traggerüstelement, das beim Ausformen der gemäß Fig. 2 rechten Cockpit-Hälfte in das Formwerkzeug miteingelegt wird, mit den zugeordneten Profilquerschnitten;
- **Fig. 5**: eine vereinfachte, perspektivische Ansicht des Formwerkzeugs für die gemäß Fig. 2 rechte Cockpit-Hälfte; und
- **Fig. 6**: einen Teilschnitt des in Fig. 5 gezeigten Formwerkzeugs längs der Linie VI-VI, nach Kompletierung mit den - in Fig. 5 nicht gezeigten - Formteilen.

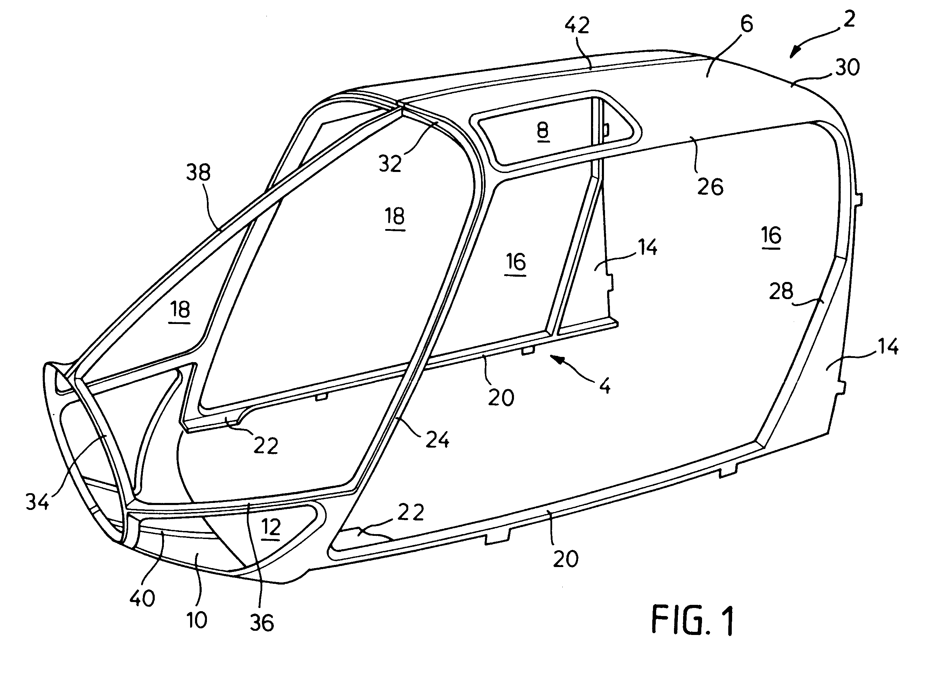

Das in Fig. 1 gezeigte Cockpit 2, welches auf der Rückseite am Mittelrumpf und auf der Unterseite an der Bodenschale (beide nicht gezeigt) eines Hubschraubers befestigt wird, enthält als Hauptbestandteile ein hinsichtlich der Betriebslasten formsteifes, insgesamt mit 4 bezeichnetes Traggerüst, sowie eine integral an die Traggerüstteile angeformte Außenverkleidung, welche aus einer Dachverschalung 6, die mit Aussparungen 8 für die Dachfenster versehen ist, sowie aus einer an die Bodenschale des Hubschraubers anschließenden Bodenverschalung 10, die mit Aussparungen 12 für die Bugfenster versehen ist, und seitlichen Verschalungsteilen 14 am rückwärtigen Cockpit-Ende besteht.

Das Traggerüst 4 ist aus Faserverbund-Hohlprofilen gebildet, die die Türausschnitte 16 sowie die Frontscheiben-Ausschnitte 18 des Cockpits 2 mit hoher Passgenauigkeit begrenzen, wodurch eine volle Austauschbarkeit der Türen und Frontscheiben gewährleistet wird.

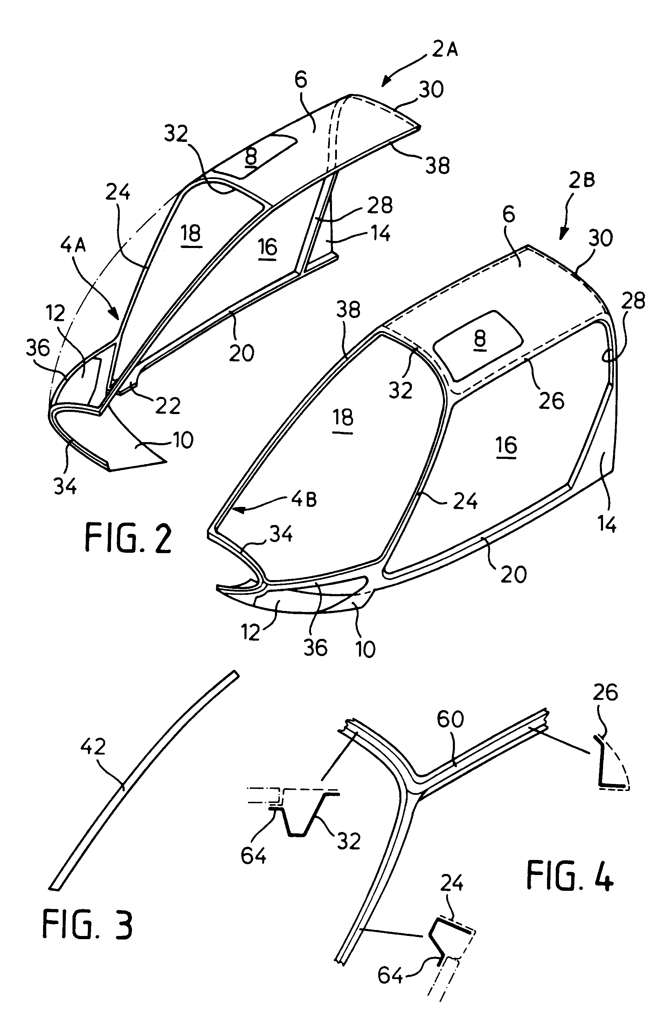

Wie Fig. 2 zeigt, ist das Cockpit aus zwei spiegelsymmetrischen Cockpit-Hälften 2A und 2B zusammengefügt, die jeweils als einschließlich der zugehörigen Verschalungsteile integrale Hohlprofilstruktur 4A bzw. 4B ausgebildet sind.

Im einzelnen besteht jede Hohlprofilstruktur 4A bzw. 4B aus einem unteren Türspant 20, welcher am vorderen Ende mit einem einstückig angeformten Auflagebock 22 zur Befestigung des Cockpits 2 an der Hubschrauber-Bodenschale versehen ist, einem daran anschließenden Türpfosten 24, welcher zugleich die seitliche Randbegrenzung für die Frontscheibe bildet, einem oberen und einem hinteren, abknickenden Türspant 26 und 28, an die sich ein hinterer Dachspant 30 zur Befestigung am Hubschrauber-Mittelrumpf und ein vorderer Dachspant 32, der die obere Frontscheiben-Begrenzung bildet, anschließen, sowie einem halbringförmigen Bugspantteil 34 welches mit dem Türpfosten 24 über einen Seitenspant 36 integral verbunden ist und gemeinsam mit diesem und einem sich vom Bugspantteil 34 über den vorderen bis zum hinteren Dachspant 32, 30 erstreckenden Mittelpfostenteil 38 den Frontscheiben-Ausschnitt 18 der Traggerüststruktur 4A bzw. 4B begrenzt.

Zusammengefügt werden die beiden Cockpit-Hälften 2A und 2B durch einen Verbindungsstreifen 40 längs der Bodenverschalungsteile 10 sowie durch eine Verbindungslasche 42 (Fig. 3), die über die gesamte Länge der Mittelpfostenteile 38 mit diesen verklebt und/oder vernietet wird, wobei die beiden Bugspantteile 34 gemeinsam den vorderen Ringspant für die Bugkappe des Cockpits und die beiden Mittelpfostenteile 38 den sich vom Ringspant bis zum hinteren Cockpitende erstreckenden, die beiden Frontscheiben des Cockpits voneinander trennenden Mittelpfosten bilden.

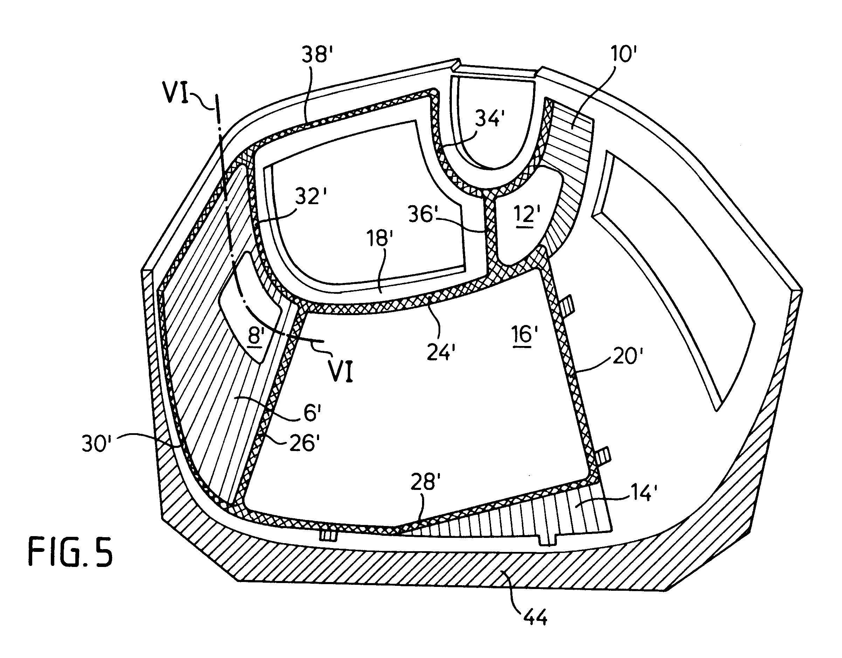

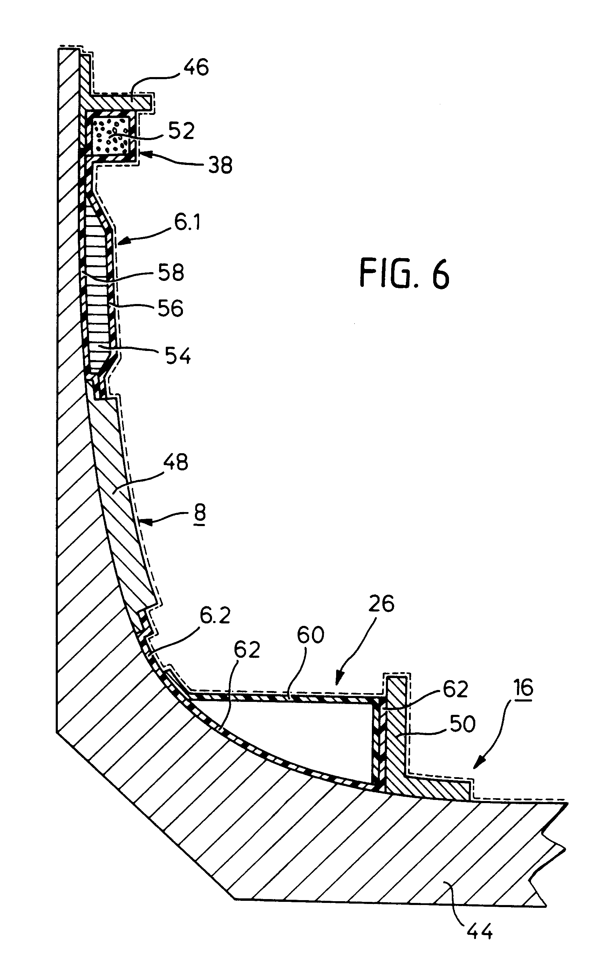

Die erwähnten Gerüstteile der beiden integralen Tragprofilstrukturen 4A bzw. 4B sind jeweils als im Querschnitt geschlossene Hohlprofile mit einer sich je nach Funktion des jeweiligen Hohlprofilteiles ändernden Querschnittskonfiguration ausgebildet und werden gemeinsam mit den Verschalungsteilen in einem Formwerkzeug 44 (Fig. 5) zu einer monolithischen Cockpithälfte ausgeformt und ausgehärtet, wobei Fig. 5 das Formwerkzeug 44 für die rechte Cockpit-Hälfte 2B zeigt. Die einzelnen, integral miteinander verbundenen Hohlprofilteile der Traggerüst-Struktur 4B werden an den entsprechend, jedoch mit einem Beistrich bezeichneten, kreuzschraffierten Flächenbereichen der Formfläche des Formwerkzeugs 44, dessen Innenkontur der Außenkontur der herzustellenden Cockpit-Hälfte entspricht, ausgeformt und ausgehärtet, während für die integral an die Traggerüst-Struktur angeformten Verschalungsteile die in Fig. 5 längsschraffierten, ebenfalls entsprechend, jedoch mit einem Beistrich bezeichneten Formflächenbereiche des Formwerkzeugs 44 vorgesehen sind. Komplettiert wird das Formwerkzeug 44 durch - in Fig. 5 der Übersichtlichkeit halber nicht dargestellte - Formstücke 46, 48, 50 gemäß Fig. 6, die die Formflächen zur Randbegrenzung der Hohlprofil- bzw. Verschalungsteile bilden.

Die Herstellungsmethode der Integralstruktur wird im einzelnen anhand des in Fig. 6 gezeigten Teilschnitts erläutert:
So wird das Rechteck-Hohlprofil des Mittelpfostenteils 38 mittels eines Schaumstoff-Stützkerns 52 hergestellt, der mit dem Faserverbundlaminat umwickelt wird.

Zur Randbegrenzung des Hohlprofils 38 dient ein am Formwerkzeug 44 befestigtes Formstück 46, wobei der für den bündigen Einbau der Verbindungslasche 42 erforderliche Rücksprung am Hohlprofil 38 durch die T-förmige Ausbildung des Formstücks 46 erreicht wird.

An das Hohlprofil 38 integral anschließend wird die Dachverschalung 6 ausgeformt. Für großflächigere Verschalungsteile oder solche mit höheren Festigkeitsanforderungen, z. B trittfeste, wird eine Sandwich-Bauweise gewählt, wie sie im oberen Teil der Fig. 6 für den Dachverschalungsabschnitt 6.1 dargestellt ist. Zu diesem Zweck wird ein Wabenkern 54, im einfachsten Fall aus Papier, zwischen eine obere und eine untere Faserverbundschicht 56, 58 einlaminiert.

Im Bereich der Fensteraussparungen der Verschalungsteile sind am Formwerkzeug 44 wiederum Formstücke, wie das Formstück 48 für die Dachfenster-Aussparung 8 gemäß Fig. 6, befestigt. Durch entsprechende Randausbildung dieser Formstücke wird der zum bündigen Einbau der Fensterscheiben erforderliche Rücksprung an den Fensteraussparungen erzielt.

Wie aus Fig. 6 für den unteren Dachverschalungsabschnitt 6.2 ersichtlich ist, werden kleinflächigere oder weniger belastete Verschalungsteile aus reinen Faserverbund-Prepregs in relativ geringer Wanddicke aufgebaut. Das sich an den Dachverschalungsabschnitt 6.2 anschließende Hohlprofil für den oberen Türspant 26, für den wiederum ein Formstück 50 mit einer Formfläche vorgesehen ist, an welcher der den Türausschnitt 16 des Cockpits begrenzende Rand des Türspants 26 passgenau ausgebildet wird, wird ohne inneren Stützkern dadurch hergestellt, daß ein vorgeformtes, formstabiles aber noch nicht vollständig ausgehärtetes Traggerüstelement 60, dessen Querschnitt einem Teil des Hohlprofils 26 entspricht, in die Form miteingelegt wird, wobei der restliche Teil des Hohlprofils 26 durch die an die Formflächen des Formwerkzeugs 44 bzw. Formstücks 50 angelegten Prepreglagen 62 ausgeformt wird.

Ein solches vorgeformtes Faserverbund-Profilelement 60, mit dessen Hilfe nicht nur das Hohlprofil 26, sondern auch die Türpfosten- und vorderen Dachspant-Hohlprofile 24, 32 ausgebildet werden, ist in Form eines dreiarmigen, einstückigen Bauteils in Fig. 4 dargestellt, zusammen mit den zugehörigen Profilquerschnitten, die jeweils zum einen durch das vorgeformte Profilelement und zum anderen durch das gleichzeitig mit diesem vollständig ausgehärtete, an die Formflächen des Formwerkzeugs angelegte Faserverbundlaminat (in Fig. 4 gestrichelt eingezeichnet) gebildet werden.

Wie gleichfalls aus Fig. 4 für die Hohlprofile 24 und 32 hervorgeht, besitzt die den Frontscheiben-Ausschnitt 18 passgenau umschließende, integrale Traggerüststruktur - in entsprechender Weise wie die Fensteraussparungen der Verschalungsteile - einen zurückspringenden Profilsteg 64, durch ein außenhautbündiger Einbau bzw. Austausch der Frontscheibe (in Fig. 4 strichpunktiert gezeichnet) ohne umständliche Einpaß-Arbeiten wesentlich erleichtert wird.

Zurückkommend auf Fig. 6 wird nach dem Belegen des Formwerkzeugs das Faserverbundmaterial in eine - in Fig. 6 gestrichelt dargestellte - Vakuumfolie eingeschlossen und dann in einem Autoklaven unter Druck-und Wärmeeinwirkung ausgehärtet, wobei der zwischen Formwerkzeug 44 und Vakuumfolie vorhandene Formraum zumindest zu Beginn des Härtungsprozesses evakuiert wird. Nach dem Aushärten ist die gesamte Cockpithälfte als integrale Faserverbundstruktur mit hoher Genauigkeit fertiggestellt. In entsprechender Weise wird auch die zweite Cockpit-Hälfte 2A gefertigt und beide Cockpit-Hälften werden dann auf die oben beschriebene Weise zusammengebaut und ermöglichen die volle Austauschbarkeit der Frontscheiben und Cockpit-Türen.

Die beiden Cockpit-Hälften lassen sich mit der - abgesehen von werkstoffspezifischen Unterschieden - gleichen Fertigungsmethode und Bauweise gewünschtenfalls auch aus superplastisch verformtem Metall als jeweils integrale Baueinheiten herstellen.

## Patentansprüche

1. Cockpit (2), insbesondere für einen Hubschrauber, bei dem als tragende Cockpitstruktur ein die Tür- und Fensterausschnitte des Cockpits begrenzendes, mit einer Außenverkleidung (6, 10, 14) versehenes Traggerüst vorgesehen ist welches aus formsteif miteinander verbundenen Gerüstteilen (20, 24, 26, 28) besteht, die zumindest im Bereich eines Cockpit-Türausschnitts (16) eine räumlich geschlossene Tragprofilstruktur bilden,
**dadurch gekennzeichnet, daß**
die einen Türausschnitt (16) des Cockpits (2) umgreifenden Gerüstteile (20, 24, 26, 28) und formsteifen Verbindungen als integrale Tragprofilstruktur (4) in der Weise ausgebildet sind, daß sie gemeinsam aus Faserverbundwerkstoff oder superplastisch verformtem Metall in einem Formwerkzeug (44 - 50) mit Formflächen für den den Türausschnitt (16) begrenzenden Rand der Tragprofilstruktur ausgeformt und erhärtet sind.

2. Cockpit nach Anspruch 1,
dadurch **gekennzeichnet**, daß
die Tragprofilstruktur (4) einen Hohlprofilquerschnitt aufweist.

3. Cockpit nach Anspruch 2,
dadurch **gekennzeichnet**, daß
die Tragprofilstruktur (4) einen geschlossenen Hohlprofilquerschnitt aufweist.

4. Cockpit nach Anspruch 2 oder 3,
dadurch **gekennzeichnet**, daß
der Hohlprofil-Innenraum aus einem Waben- oder Schaumstoff-Stützkern (52) oder einem aufblasbaren Druckschlauch besteht.

5. Cockpit nach einem der vorhergehenden Ansprüche,
dadurch **gekennzeichnet**, daß
die Tragprofilstruktur (4) mindestens ein vorgeformtes, in das Formwerkzeug (44 - 50) miteingelegtes Traggerüstelement (60) enthält, das ebenfalls aus Faserverbundwerkstoff oder superplastisch verformtem Metall besteht.

6. Cockpit nach einem der vorhergehenden Ansprüche,
**dadurch gekennzeichnet**, **daß**
die Außenverkleidung (6, 10) als integraler materialgleicher Bestandteil der Tragprofilstruktur (4) gleichzeitig und gemeinsam mit dieser im Formwerkzeug (44 - 50) mitausgeformt und erhärtet ist.

7. Cockpit nach einem der vorhergehenden Ansprüche,
dadurch **gekennzeichnet**, daß
die integrale Tragprofilstruktur (4) mindestens zwei Cockpitausschnitte (16, 18) einschließlich des Türausschnitts (16) umfaßt.

8. Cockpit nach einem der vorhergehenden Ansprüche, mit einem zwischen zwei Frontfensterausschnitten des Cockpits in der Cockpit-Mittelebene angeordneten Tragpfosten,
dadurch **gekennzeichnet**, daß
das Cockpit (2) aus zwei, zur Cockpit-Mittelebene spiegelsymmetrischen, jeweils als integrale Tragprofilstruktur (4) ausgebildeten Cockpit-Hälften (2A und 2B) zusammengefügt ist.

## Claims

1. Cockpit (2), in particular for a helicopter, comprising a support frame, which serves as a cockpit-support structure and which defines the door and window sections of the cockpit and which is provided with an external panelling (6, 10̸, 14) and which is composed of shape-retaining interconnected frame elements (20̸, 24, 26, 28) which form, at least in the area of a cockpit door section (16), a spatially closed support-profile structure, **characterised in that** the frame elements (20̸, 24, 26, 28) which surround a door section (16) of the cockpit (2) and the shape-retaining connections are arranged as an integral support-profile structure (4) in such a manner that they are together formed and hardened of a fibre-composite material or super-plastically deformed metal in a forming tool (44-50̸) having forming surfaces for the edge of the support-profile structure which defines the door section (16).

2. Cockpit according to claim 1, **characterised in that** the support-profile structure (4) comprises a hollow-profile cross-section.

3. Cockpit according to claim 2, **characterised in that** the support-profile structure (4) comprises a closed hollow-profile cross-section.

4. Cockpit according to claim 2 or 3, **characterised in that** the hollow-profile inside space is composed of a honeycomb- or foam-material support core (52) or an inflatable pressure hose.

5. Cockpit according to one of the above claims, **characterised in that** the support-profile structure (4) includes at least one preshaped support-frame element (60̸), which is also placed in the forming tool (44 - 50̸) and which is also made of a fibre-composite material or super-plastically deformed metal.

6. Cockpit according to one of the above claims, **characterised in that** the external panelling (6, 10̸) as an integral part of the support-profile structure (4) of same material is formed and hardened simultaneously and together with the latter in the moulding tool (44-50̸).

7. Cockpit according to one of the above claims, **characterised in that** the integral support-profile structure (4) includes at least two cockpit sections (16, 18) including the door section (16).

8. Cockpit according to one of the above claims, comprising a support post which is arranged between two stern window sections of the cockpit and the middle plane of the cockpit, **characterised in that** the cockpit (2) is an assembly of two cockpit halves (2A and 2B), which are arranged mirror-symmetrically to the middle plane of the cockpit and as respective integral support-profile structures (4).

## Revendications

1. Cockpit (2), en particulier pour un hélicoptère, dans lequel il est prévu comme structure porteuse une armature porteuse pourvue d'un habillage extérieur (6, 10, 14), qui délimite les ouvertures de porte et de fenêtre et est constituée par des éléments d'armature (20, 24, 26, 28) liés entre eux de manière indéformable, lesquels éléments, dans la région au moins d'une découpe de porte (16), forment une structure de profilés porteurs fermée dans l'espace, caractérisé par le fait que les éléments d'armature (20, 24, 26, 28) qui entourent une découpe (16) de porte du cockpit (2) ainsi que les liaisons indéformables sont agencés sous forme de structure intégrale (4) de profilés porteurs, de manière telle qu'ils sont formés et durcis conjointement à partir de matière composite renforcée par fibres ou de métal ayant subi une transformation superplastique dans un moule (44 - 50) pourvu de surfaces pour le bord de la structure de profilés porteurs qui délimite l'ouverture de porte (16).

2. Cockpit selon la revendication 1, caractérisé par le fait que la structure (4) de profilés porteurs a une section de profilé creux.

3. Cockpit selon la revendication 2, caractérisé par le fait que la structure (4) de profilés porteurs a une section de profilés creux fermé.

4. Cockpit selon la revendication 2 ou 3, caractérisé par le fait que la chambre intérieure du profilé creux est constituée par un noyau porteur (52) en nid d'abeille ou en matière moussée ou par un tube souple gonflable.

5. Cockpit selon l'une des revendications précédentes, caractérisé par le fait que la structure (4) de profilés porteurs comprend au moins un élément (60) d'armature porteuse préfabriqué qui est placé conjointement dans le moule (44 - 50) et est lui aussi formé de matériau composite renforcé par fibres ou de métal ayant subi une transformation superplastique.

6. Cockpit selon l'une des revendications précédentes, caractérisé par le fait que l'habillage extérieur (6, 10), en tant que partie intégrante, en matériau de même nature, de la structure (4) de profilés porteurs est formée et durcie conjointement et simultanément avec celle-ci dans le moule (44 - 50).

7. Cockpit selon l'une des revendications précédentes, caratérisé par le fait que la structure (4) intégrale de profilé porteurs comporte au moins deux découpes (16, 18), découpe de porte (16) comprise.

8. Cockpit selon l'une des revendications précédentes comportant un montant disposé dans le plan médian du cockpit, entre deux parties de pare-brise, caractérisé par le fait que le cockpit (2) est formé par assemblage de deux moitiés de cockpit (2A, 2B) à symétrie inverse par rapport au plan médian du cockpit qui sont agencées chacune sous forme de structure (4) intégrale de profilés porteurs.
